# EUROPEAN PATENT SPECIFICATION

(11) **EP 4 415 431 B1**
(45) Date of publication and mention of the grant of the patent: **11.11.2026**
(21) Application number: 24185367.0
(22) Date of filing: 02.11.2018
(51) Int. Cl.: H04W 52/02

(54) **POWER SAVINGS SCHEMES IN WIRELESS COMMUNICATION**
ENERGIESPARSCHEMATA IN DER DRAHTLOSEN KOMMUNIKATION
SCHÉMAS D'ÉCONOMIE D'ÉNERGIE DANS UNE COMMUNICATION SANS FIL

(43) Date of publication of application: 14.08.2024
(62) Document number(s) of the earlier application(s) in accordance with Art. 76 EPC: 18930346.4 / 3 874 826
(73) Proprietor: ZTE Corporation, Shenzhen, Guangdong 518057 (CN)
(72) Inventor: LI, Liguang, Shenzhen, 518057 (CN); XU, Jun, Shenzhen, 518057 (CN); CHEN, Mengzhu, Shenzhen, 518057 (CN); MA, Xiaoying, Shenzhen, 518057 (CN); XU, Jin, Shenzhen, 518057 (CN)
(74) Representative: Vossius & Partner Patentanwälte Rechtsanwälte mbB

(56) References cited:
- WO-A1-2018/175805
- WO-A1-2018/177223
- US-A1- 2010 035 555
- US-A1- 2020 021 420
- "3rd Generation Partnership Project; Technical Specification Group Radio Access Network; NR; Physical layer procedures for data (Release 15)", 1 October 2018 (2018-10-01), XP051477733, Retrieved from the Internet <URL:http://www.3gpp.org/ftp/3guInternal/3GPP%5Fultimate%5Fversions%5Fto%5Fbe%5Ftransposed/sentToDpc> [retrieved on 20181001]
- "3 Generation Partnership Project; Technical Specification Group Radio Access Network; Evolved Universal Terrestrial Radio Access (E-UTRA); Multiplexing and channel coding (Release 15)", 3GPP STANDARD; TECHNICAL SPECIFICATION; 3GPP TS 36.212, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. RAN WG1, no. V15.3.0, 27 September 2018 (2018-09-27), pages 1 - 247, XP051487407

## Description

### TECHNICAL FIELD

This patent document generally relates to systems, devices, and techniques for wireless communications.

### BACKGROUND

Wireless communication technologies are moving the world toward an increasingly connected and networked society. The rapid growth of wireless communications and advances in technology has led to greater demand for capacity and connectivity. Other aspects, such as energy consumption, device cost, spectral efficiency, and latency are also important to meeting the needs of various communication scenarios. In comparison with the existing wireless networks, next generation systems and wireless communication techniques need to provide support for an increased number of users and devices, thereby requiring robust interference mitigation when using multiple access protocols.

WO 2018/175805 A1 relates to timing determination techniques for 5G radio access network cells.

### SUMMARY

This document relates to methods, systems, and devices for power saving schemes in wireless communication. The disclosed technology describes methods that can be implemented at a plurality of network-side devices (such as a base station) to prevent or reduce unnecessary power consumptions of a user device.

The invention is specified by the independent claims. Preferred embodiments are defined in the dependent claims.

### BRIEF DESCRIPTION OF THE DRAWINGS

FIG. 1 shows an example of a base station (BS) and user equipment (UE) in wireless communication based on some implementations of the disclosed technology.
FIG. 2 shows an example of a block diagram of a portion of an apparatus based on some implementations of the disclosed technology.
FIG. 3 shows a conventional process for configurating parameters of a user device.
FIG. 4 shows an example of a power saving scheme based on some implementations of the disclosed technology.
FIG. 5 shows an example of a cross slot scheduling for PDSCH based on an implementation of the disclosed technology.
FIG. 6 shows an example of a multi slot scheduling based on an implementation of the disclosed technology.
FIG. 7 shows an example of a slot aggregation scheduling based on an implementation of the disclosed technology.
FIGS. 8-10 show examples of DRX processing based on some implementations of the disclosed technology.
FIG. 11 shows an example of CA processing based on some implementations of the disclosed technology.
FIG. 12 shows another example of a power saving scheme based on some implementations of the disclosed technology.

### DETAILED DESCRIPTION

The disclosed technology provides implementations and examples of power saving schemes in a wireless communication. Some implementations of the disclosed technology provide techniques to prevent or reduce unnecessary power consumptions of a user equipment (UE) by allowing a UE to be in a power saving mode.

In NR (New Radio), the power consumption of the UE may be very high due to the increased level of computational complexity of implementation and also due to the amount of data that the UE may be producing or consuming. Since the UE directly relates to the user's experience, the large power consumption of the UE results in undesired user experience. In the existing communication system, configuration parameters of UE are generally configured by a network-side device, for example, a base station. The parameters configured by the network-side device may not quickly adapt to the instant traffic changes. In case that the configuration parameters are not updated or reconfigured based on the traffic, it is possible that the parameters may configure the UE to have an adverse effect of unnecessarily increasing power consumption.

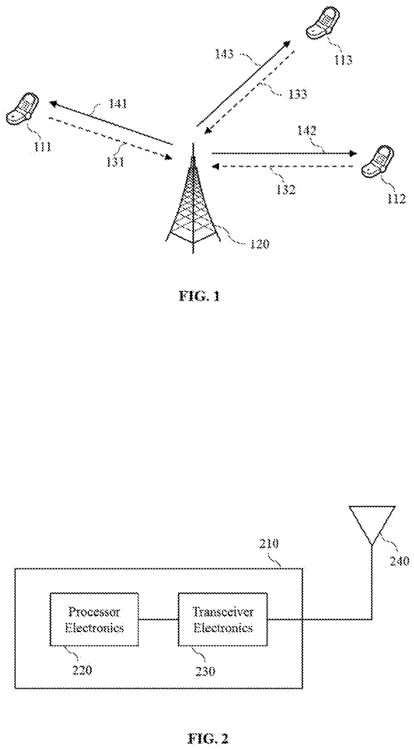

FIG. 1 shows an example of a wireless communication system (e.g., a 5G or NR cellular network) that includes a BS 120 and one or more user equipment (UE) 111, 112 and 113. In some embodiments, the UEs access the BS (e.g., the network) using implementations of the disclosed technology (131, 132, 133), which then enables subsequent communication (141, 142, 143) from the BS to the UEs. The UE may be, for example, a smartphone, a tablet, a mobile computer, a machine to machine (M2M) device, an Internet of Things (IoT) device, and so on.

FIG. 2 shows an example of a block diagram representation of a portion of an apparatus. An apparatus 210 such as a base station or a wireless device (or UE) can include processor electronics 220 such as a microprocessor that implements one or more of the techniques presented in this document. The apparatus 210 can include transceiver electronics 230 to send and/or receive wireless signals over one or more communication interfaces such as antenna 240. The apparatus 210 can include other communication interfaces for transmitting and receiving data. The apparatus 210 can include one or more memories (not explicitly shown) configured to store information such as data and/or instructions. In some implementations, the processor electronics 220 can include at least a portion of transceiver electronics 230. In some embodiments, at least some of the disclosed techniques, modules or functions are implemented using the apparatus 210.

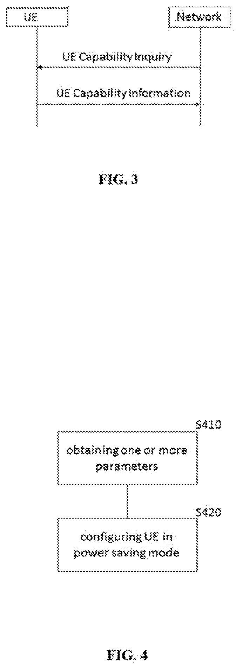

FIG. 3 shows a conventional process for configurating parameters of a user device. The configured parameters may include parameters such as time, frequency, spatial domain, and so on. As shown in FIG. 3, in the existing communication system, the network-side device first sends a UE capability inquiry to UE. After the reception of UE capability inquiry from the network-side device, the UE would report its capability information ("UE capability information"). The maximum ability of parameter configuration supported by the UE is included in the UE capability information which includes time domain processing capability, frequency domain processing capability and MIMO processing capability. After receiving the UE capability information, the network configures the UE with configuration parameters based on scheduling strategies and channel state information. The configuration parameters, however, may cause unnecessary power consumption by remaining the same without the reconfiguration. For example, the parameters configured in URLLC (Ultra-Reliable Low Latency) may cause unnecessary power consumption when used in eMBB (Enhanced Mobile Broadband). Therefore, the disclosed technology provides power saving schemes to prevent or reduce the unnecessary power consumption and achieve the UE power saving. According to some implementations of the disclosed technology, the UE can adapt to different traffics to save its power consumption.

The techniques or methods disclosed in this patent document for processing the UE power saving can be applied to a new radio access technology (NR) communication system, an LTE mobile communication system, a fifth generation (5G) mobile communication system, or other wireless/wired communication system. The techniques or methods can be performed at a network-side device such as the base station. In some implementations, the base station may include at least one of an access point (AP), a Node B, a radio network controller (RNC), an evolved Node B (eNB or gNB), a base station controller (BSC), a Base Transceiver Station (BTS), a Base Station (BS), a Transceiver Function (TF), a Radio Router, a Radio Transceiver, a Basic Service Unit, an Extended Service Unit, a radio base station (RBS), or some other terminology.

FIG. 4 shows an example of a power saving scheme based on the disclosed technology. As shown in FIG. 4, the power saving scheme proceeds to configure the UE in the power saving mode based on one or more parameters. At 410, one or more parameters are obtained. In some implementations, the one or more parameters may comprise at least one of following parameters: scrambling method configured for PDCCH (Physical Downlink Control Channel), actual scrambling method of PDCCH, DCI (Downlink Control Information) format, control resource set, search space, PDCCH candidates, aggregation level, subcarrier spacing, frequency range, CSI (channel state information) report configuration, PDSCH (Physical Downlink Shared Channel) configuration, PUSCH (Physical Uplink Shared Channel) configuration, semi persistent scheduling configuration, or uplink OFDM (Orthogonal Frequency Division Multiplexing) waveform. The scrambling method of PDCCH can be chanced during the operation due to various reasons and thus the actual scrambling method of PDCCH can be different from the scrambling method configured for PDCCH. The below is more information included in each of the parameters obtained at 410.

The scrambling method configured for PDCCH may comprise at least one of following parameters: C-RNTI (Cell Radio Network Temporary Identifier), MCS-C-RNTI (Modulation and coding scheme C-RNTI), TC-RNTI (temporary C-RNTI), SP-CSI-RNTI (Semi-Persistent Channel State Information RNTI), CS-RNTI (Configured Scheduling RNTI), RA-RNTI (Random access-RNTI).

The actual scrambling method of PDCCH may comprise at least one of following parameters: C-RNTI, MCS-C-RNTI, TC-RNTI, SP-CSI-RNTI, CS-RNTI, RA-RNTI.

The DCI format may comprise at least one of following parameters: DCI format 0_0, DCI format 0_1, DCI format 1_0, DCI format 1_1, DCI format 2_0, DCI format 2_1, DCI format 2_2, DCI format 2_3. DCI format 0_0 is used for the scheduling of PUSCH in one cell. DCI format 0_0 includes following items: Identifier for DCI formats, Frequency domain resource assignment, Time domain resource assignment, Frequency Hopping Flag, Modulation and coding scheme, New data indicator, Redundancy version, HARQ process number, TPC command for scheduled PUSCH, and UL/SUL indicator. DCI format 0_1 is used for the scheduling of PUSCH in one cell. DCI format 0_1 is also used for the scheduling of PUSCH in one cell and it has more items than DCI format 0_0. DCI format 1_0 is applied for scheduling of PDSCH in one cell and it can be scrambled by C-RNTI, RA-RNTI, TC-RNTI, SI-RNTI or P-RNTI. DCI format 1_1 is also used for the scheduling of PDSCH in one cell and it has more items than DCI format 1_0. DCI format 2_0 is used for notifying a group of UEs of the slot format. DCI format 2_1 is used for notifying a group of UEs of the PRB(s) and OFDM symbol(s) where UE may assume no transmission is intended for the UE. Format 2 2 is used for transmission of TPC commands for PUCCH and PUSCH. Format 2 3 is used for transmission of a group of TPC commands for SRS transmissions by one or more UEs.

The control resource set may comprise at least one of following parameters: frequency domain resource, duration, PDCCH DMRS (demodulation reference signal) scrambling ID, precoder granularity.

The search space may comprise at least one of following parameters: search space type, PDCCH monitoring slot periodicity, PDCCH monitoring slot duration.

The PDCCH candidates may comprise at least one of following parameters: number of candidates for aggregation level 1, number of candidates for aggregation level 2, number of candidates for aggregation level 4, number of candidates for aggregation level 8, number of candidates for aggregation level 16.

The aggregation level may comprise one of following parameters: 1, 2, 4, 8, 16.

The subcarrier spacing may comprise one of following parameters: 15 kHz, 30 kHz, 60 kHz, 120 kHz, 240 kHz, 480 kHz.

The frequency range may comprise one of following parameters: FR1 (frequency range 1) and FR2 (frequency range 2).

The CSI report configuration may comprise one of following parameters: CQI (Channel quality indicator) table, report configuration type, CQI format indicator, PMI (Precoding matrix indicator) format indicator, CSI report periodicity and offset.

The PDSCH configuration may comprise one of following parameters: MCS (Modulation and coding scheme) table of PDSCH, start symbol and length of PDSCH, PDSCH aggregation factor.

The PUSCH configuration may comprise one of following parameters: MCS table of PUSCH, start symbol and length of PUSCH, PUSCH aggregation factor.

The semi persistent scheduling configuration may comprise at least one of following parameters: MCS table, periodicity.

The uplink OFDM waveform configuration may comprise: cyclic prefix OFDM, transform precoding OFDM.

At 420, configuring the UE in the power saving mode is performed. In the disclosed technology, the configuring the UE in the power saving mode can be implemented various ways which include at least one of the following: enhanced time domain processing for power saving, enhanced DRX (Discontinuous Reception) processing for power saving, enhanced BWP (Bandwidth Part) processing for power saving, enhanced CA (Carrier Aggregation) processing for power saving, enhanced MIMO (Multiple Input Multiple Output) processing for power saving, enhanced PDCCH monitoring for power saving.

### Examples of enhanced Time Domain Processing for Power Saving

The enhanced time domain processing for power saving comprises one of following: cross slot scheduling for PDSCH, multi-slot scheduling, slot aggregation scheduling, cross slot scheduling for HARQ-ACK (Hybrid automatic repeat request acknowledgement), cross slot scheduling for PUSCH.

### Cross-slot scheduling for PDSCH

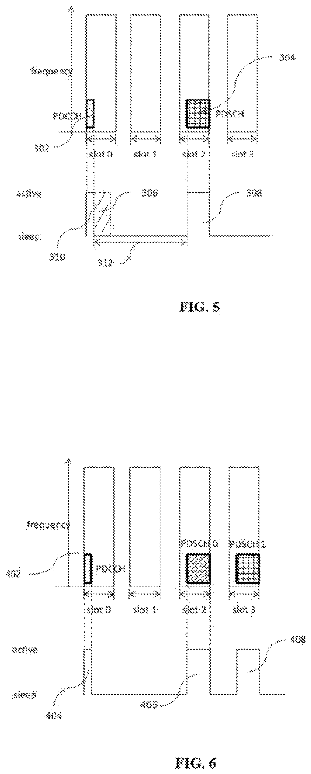

FIG. 5 shows an example of a cross slot scheduling for PDSCH. The signal in PDCCH (Physical Downlink Control Channel) 302 is monitored or decoded (blind-decoded) to obtain DCI. The DCI indicates the position of PDSCH 304. If the gap (specified in slots) between the position of PDCCH and the position of PDSCH is greater than 0, it is referred to as 'cross-slot scheduling'. The example of the cross-slot scheduling is shown in FIG. 5 with the gap equal to 2 slots. The UE has 2 states: sleep state (power saving, such as micro sleep, light sleep or deep sleep) and active state (high power for signal receiving / processing). Slots with PDCCH monitoring only (without any scheduling grant and PDSCH/PUSCH/PUCCH) takes a significant portion of time and energy. The occasion when the UE monitors the PDCCH only without any scheduling grant and PDSCH/PUSCH/PUCCH will be referred to as PDCCH monitoring only case for the ease of reference. If the UE is unaware of the cross-slot scheduling of PDSCH in advance, it needs to receive the remaining OFDM symbols corresponding to PDCCH decoding time (as 306 in FIG. 5) and it will lead to unnecessary power consumption. RF (Radio Frequency) dominates the overall power consumption in the PDCCH monitoring only case. The sleep state (micro sleep) is regarded as the most efficient power saving scheme in the PDCCH monitoring only case. During the micro sleep, RF components is turned off, when no grant is detected within a slot. If the UE knows the cross scheduling for PDSCH in advance, it can go into sleep (such as micro sleep) as soon as possible after receiving the last OFDM symbol of PDCCH and the power consumption can be reduced, as 312 in FIG. 5. In FIG. 5, the UE receives the DCI at 310 and PDSCH at 308. If the gap (specified in slots) between the position of PDCCH and the position of PDSCH is equal to 0, it is referred to as 'same slot scheduling'.

A more specific example is described follow. The IE (Information Element) 'PDSCH-TimeDomainResourceAllocation' is used to configure a time domain relation between PDCCH and PDSCH. The time domain relation between PDCCH and PDSCH is defined as slot offset 'k0', where k0>0 for cross slot scheduling and k0=0 for same slot scheduling. The *'PDSCH-TimeDomainResourceAllocationList'* contains one or more of such PDSCH-TimeDomainResourceAllocations. The network indicates in the DL (Downlink) assignment which of the configured time domain allocations the UE shall apply for that DL assignment. Value 0 in the DCI field refers to the first element in this list, value 1 in the DCI field refers to the second element in this list, and so on. An example for the cross-slot scheduling for power saving, all the values of k0 in *'PDSCH-TimeDomainResourceAllocationList'* are greater than 0. Another example for the cross-slot scheduling for power saving, the non-zero values of k0 in *'PDSCH TimeDomainResourceAllocationList'* are configured.

### Multi-slot scheduling

FIG. 6 shows an example for multi-slot scheduling. The UE would spend greater amount of power in processing large amount of data. The processing of large data could be done by not only the wider bandwidth but also longer duration. The large data packet might need to be segmented and served by multiple slots. If multi-slot data packets were scheduled to receive the large data pack in separately distributed slots, the UE would spend the unnecessary power on PDCCH decoding and other signal processes during the non-received slot. From UE power saving perspective, it would be better for the UE to receive and/or transmit the data in consecutive slots to finish all data reception/transmission in one shot including all HARQ (Hybrid automatic repeat request) feedback. The solution for the UE power saving is to support multi-slot scheduling, which the DCI contains resource allocations and other scheduling information for more than one slot in order for the UE to complete the reception and/or transmission in shortest time and minimize the power consumption. As shown in FIG. 6, the UE needs to wake up to receive DCI in PDCCH 402 at 404. The DCI indicates the scheduling information for PDSCH 0 406 and PDSCH 1 408. Generally, each PDSCH is scheduled by one DCI. UE only needs to wake up 3 times: monitoring PDCCH at slot 0, receiving PDSCH 0 at slot 2 and PDSCH 1 at slot 3. Therefore, UE just decodes one PDCCH and its power consumption can be reduced. The multi-slot scheduling can also be configured for PUSCH as well as PDSCH.

### Slot aggregation scheduling

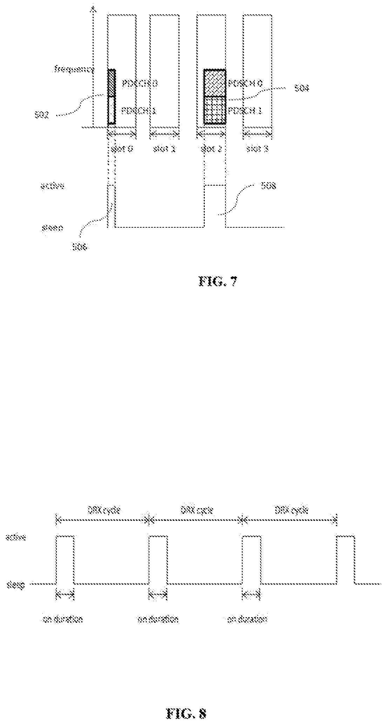

FIG. 7 shows an example for slot aggregation scheduling. Two different data packets corresponding to PDSCH 0 and PDSCH 1 are transmitted to the UE. Each data packet (PDSCH) is scheduled by the DCI. For slot aggregation scheduling, the two DCIs are transmitted in the same slot 502 in FIG. 7, and the two PDSCHs are also allocated at the same slot 504 in FIG. 7. The UE wakes up to decode the two DCIs in the slot 0 at 506 and receives PDSCH in the slot 2 at 508. The UE only needs to wake up twice: monitoring PDCCH at slot 0, receiving PDSCH at slot 2. Therefore, the UE power consumption can be reduced for decrease of wake up. The slot aggregation scheduling can also be configured for PUSCH as well as PDSCH.

For power saving of cross slot scheduling for HARQ-ACK is described as follow. The UE needs to return a HARQ-ACK to the base station after a PDSCH is received. If the UE detects a DCI format 1_0 or a DCI format 1_1 scheduling a PDSCH reception ending in slot n or if the UE detects a DCI format 1_0 indicating a SPS PDSCH release through a PDCCH reception ending in slot n , the UE provides corresponding HARQ-ACK information in a PUCCH transmission within slot *n+k*, where *k* is a number of slots and is indicated by the PDSCH-to-HARQ-timing-indicator field in the DCI format (cross slot scheduling for HARQ-ACK is configured when *k* > 0). k may be named as slot offset *k*1. It is provided by higher layer parameter *dl-DataToUL-ACK.* If the PDSCH subcarrier spacing is equal to or greater than the PUCCH subcarrier spacing or, in case of SPS PDSCH release if the PDCCH subcarrier spacing is equal to or greater than the PUCCH subcarrier spacing, *k* = 0 corresponds to the slot of the PUCCH transmission that overlaps with the slot of the PDSCH reception or of the PDCCH reception in case of SPS PDSCH release. If the PDSCH subcarrier spacing is smaller than the PUCCH subcarrier spacing or, in case of SPS PDSCH release if the PDCCH subcarrier spacing is smaller than the PUCCH subcarrier spacing, *k* = 0 corresponds to the slot of the PUCCH transmission that ends at a same time as the slot of the PDSCH reception or of the PDCCH reception in case of SPS PDSCH release.

For DCI format 1_0, the PDSCH-to-HARQ-timing-indicator field values map to {1, 2, 3, 4, 5, 6, 7, 8}. For DCI format 1_1, the PDSCH-to-HARQ-timing-indicator field values map to values for a set of number of slots provided by higher layer parameter *dl-DataToUL-ACK* of *'PUCCH-Config'* as defined in Table 1. The *dl-DataToUL-ACK* contains at least one or maximum 8 values from the set {0, 1, 2, 3, 4, ..., 15}.

**Table 1: Mapping of PDSCH-to-HARQ_feedback timing indicator field values to numbers of slots**

| PDSCH-to-HARQ_feedback timing indicator | | | Number of slots *k* |
|---|---|---|---|
| 1 bit | 2 bits | 3 bits | |
| '0' | '00' | '000' | 1^{st} value provided by *dl-DataToUL-ACK* |
| '1' | '01' | '001' | 2^{nd} value provided by *dl-DataToUL-ACK* |
| | '10' | '010' | 3^{rd} value provided by *dl-DataToUL-ACK* |
| | '11' | '011' | 4^{th} value provided by *dl-DataToUL-ACK* |
| | | '100' | 5^{th} value provided by *dl-DataToUL-ACK* |
| | | '101' | 6^{th} value provided by *dl-DataToUL-ACK* |
| | | '110' | 7^{th} value provided by *dl-DataToUL-ACK* |
| | | '111' | 8^{th} value provided by *dl-DataToUL-ACK* |

For power saving of cross slot scheduling for HARQ-ACK, all the values in *dl-DataToUL-ACK* are larger than 0. An example for cross slot scheduling for HARQ-ACK, *dl-DataToUL-ACK* is equal to {2,4,6,8}.

For power saving of cross slot scheduling for PUSCH is described as follow. When the UE is scheduled to transmit a transport block and no CSI report, or the UE is scheduled to transmit a transport block and a CSI report(s) on PUSCH by a DCI, the *Time domain resource assignment* field value *m* of the DCI provides a row index *m +* 1 to an allocated table 2. The value of *j* is defined in Table 3, where µ*_{PUSCH}* is the subcarrier spacing configurations for PUSCH. The indexed row defines the slot offset *K₂*, the start symbol *S* and the allocation length *L*, and the PUSCH mapping type to be applied in the PUSCH transmission.

For power saving of cross slot scheduling for PUSCH, the value of ***K*₂** is configured larger than 1. An example for cross slot scheduling for PUSCH, the *Time domain resource assignment* field value *m* of the DCI is configured as one of {7, 8, 9, 10, 11, 12, 14, 15}.

**Table 2: Default PUSCH time domain resource allocation A for normal CP**

| Row index | PUSCH mapping type | ***K*₂** | *S* | *L* |
|---|---|---|---|---|
| 1 | Type A | *j* | 0 | 14 |
| 2 | Type A | *j* | 0 | 12 |
| 3 | Type A | *j* | 0 | 10 |
| 4 | Type B | *j* | 2 | 10 |
| 5 | Type B | *j* | 4 | 10 |
| 6 | Type B | *j* | 4 | 8 |
| 7 | Type B | *j* | 4 | 6 |
| 8 | Type A | *j+*1 | 0 | 14 |
| 9 | Type A | *j+*1 | 0 | 12 |
| 10 | Type A | *j+*1 | 0 | 10 |
| 11 | Type A | *j*+2 | 0 | 14 |
| 12 | Type A | *j*+2 | 0 | 12 |
| 13 | Type A | *j*+2 | 0 | 10 |
| 14 | Type B | *j* | 8 | 6 |
| 15 | Type A | *j+*3 | 0 | 14 |
| 16 | Type A | *j+*3 | 0 | 10 |

**Table 3: Definition of value j**

| ***µ_{PUSCH}*** | ***j*** |
|---|---|
| 0 | 1 |
| 1 | 1 |
| 2 | 2 |
| 3 | 3 |

Or, when the UE is scheduled to transmit a PUSCH with no transport block and with a CSI report(s) by a *CSI request* field on a DCI, the *Time-domain resource assignment* field value *m* of the DCI provides a row index *m +* 1 to an allocated table which is defined by the higher layer configured '*pusch-TimeDomainAllocationList'* in *'pusch-Config'.* The IE '*PUSCH-TimeDomainResourceAllocation'* is used to configure a time domain relation between PDCCH and PUSCH. The IE '*PUSCH-TimeDomainResourceAllocationList'* contains one or more of such *PUSCH-TimeDomainResourceAllocations.* The network indicates in the UL grant which of the configured time domain allocations the UE shall apply for that UL grant. The UE determines the bit width of the DCI field based on the number of entries in the '*PUSCH-TimeDomainResourceAllocationList'.* Value 0 in the DCI field refers to the first element in this list, value 1 in the DCI field refers to the second element in this list, and so on. The indexed row defines the start and length indicator SLIV, and the PUSCH mapping type to be applied in the PUSCH transmission and the slot offset *K₂* value is determined as ${K}_{2} = {max}_{j} {Y}_{j} \left(m+1\right)$, where *Yⱼ*, *j* = 0,..., *N*_{Rep} -1 are the corresponding list entries of the higher layer parameter *reportSlotOffsetList* in *CSI-ReportConfig* for the *N*_{Rep} triggered CSI Reporting Settings and *Yⱼ*(*m* + 1) is the *(m+1)*th entry of *Yⱼ*. The slot where the UE shall transmit the PUSCH is determined by *K₂* as $\left⌊n⋅\frac{{2}^{{μ}_{PUSCH}}}{{2}^{{μ}_{PDCCH}}}\right⌋ + {K}_{2}$ where *n* is the slot with the scheduling DCI, *K₂* is based on the numerology of PUSCH, and *µ*_{PUSCH} and *µ*_{PDCCH} are the subcarrier spacing configurations for PUSCH and PDCCH, respectively.

The starting symbol *S* relative to the start of the slot, and the number of consecutive symbols *L* counting from the symbol *S* allocated for the PUSCH are determined from the start and length indicator *SLIV* of the indexed row:

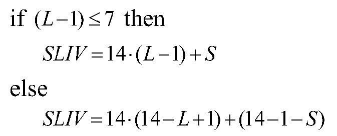

The UE shall consider the *S* and *L* combinations defined in Table 4 as valid PUSCH allocations

**Table 4: Valid S and L combinations**

| PUSCH mapping type | Normal cyclic prefix | | | Extended cyclic prefix | | |
|---|---|---|---|---|---|---|
| | *S* | *L* | *S+L* | *S* | *L* | *S+L* |
| Type A | 0 | {4,...,14} | {4,...,14} | 0 | {4,...,12} | {4,...,12} |
| Type B | {0,...,13} | {1,...,14} | {1,...,14} | {0,...,12} | {1,...,12} | {1,...,12} |

For power saving of cross slot scheduling for PUSCH, all the values of ***K*₂** are larger than 1. An example for cross slot scheduling for PUSCH, all the values of ***K*₂** in '*PUSCH-TimeDomainResourceAllocationList'* are configured as {3,5,7,8,9,10,12,15}.

### Enhanced DRX Processing for Power Saving

The enhanced DRX processing for power saving comprises one of following: reduction of DRX 'on duration' timer, reduction of DRX inactivity timer, reduction of DRX re-transmission timer, increase of DRX short cycle, increase of DRX long cycle, reduction of DRX short cycle timer.

### Reduction of DRX 'on duration' timer

FIG. 8 shows an example of DRX processing. In each DRX cycle, 'on duration' period and inactivity period are configured. During the 'on duration' period, the UE monitors the PDCCH in the configured search space sets to check if a UL/DL (Uplink/Downlink) scheduling is granted. Minimizing 'on duration' facilitates the power saving and thus, some implementations of the disclosed technology suggest configuring the UE with a relatively short 'on duration' (reduction of DRX on duration timer), as far as the latency requirement allows. An example for reducing the DRX 'on duration' timer is described as follows. The IE 'DRX-Config' is used to configure DRX related parameters and it includes at least parameter of 'drx-onDurationTimer'. Value for 'drx-onDurationTimer' is specified in multiples of 1/32 ms (subMilliSeconds) or in ms (milliSecond). For the latter, ms1 corresponds to 1ms, ms2 corresponds to 2ms, and so on. The value of 'drx-onDurationTimer' can be set as one of milliseconds set of { ms1, ms2, ms3, ms4, ms5, ms6, ms8, ms10, ms20, ms30, ms40, ms50, ms60, ms80, ms100, ms200, ms300, ms400, ms500, ms600, ms800, ms1000, ms1200, ms1600 } or one of sub-milliseconds set of {1...32}. An example for power saving mode is that the value for 'drx-onDurationTimer' is less than T0 ms, wherein T0 is equal to 1, 2, 4, 6, or 8. For different frequency ranges, the values of T0 are different, such T0 is 2 or 4 for FR1 (carrier frequency is less than 6 GHz or sub-6 GHz) and T0 is 0.5 or 1 for FR2 (carrier frequency is larger than 6 GHz) .

### Reduction of DRX inactivity timer

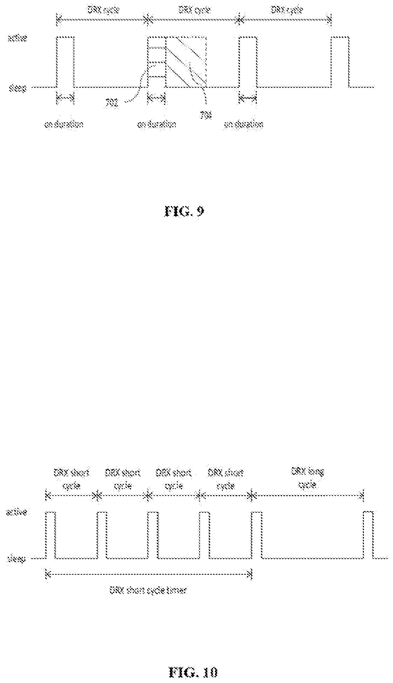

FIG. 9 shows an example of DRX processing. As shown in FIG. 9, when there is DCI detected to schedule new data during the 'on duration' period 702, an 'inactivity timer' 704 will be triggered. The UE keeps monitoring the PDCCH until the 'inactivity timer' expires and the 'inactivity timer' shall be restarted when there is new data scheduled. During the 'on duration' period and before the 'inactivity timer' expires, the UE is in active time. When the 'inactivity timer' expires, the UE is no longer in active time, and in this case the UE can go into sleep mode for power saving. Reduction of DRX inactivity timer can cut down the UE active time, which results in low power consumption. An example for reducing DRX inactivity timer is described as follow. The IE *'DRX-Config'* is used to configure DRX related parameters and it includes at least parameter of 'drx-InactivityTimer'. Value of 'drx-InactivityTimer' is specified in multiple integers of 1ms. ms0 corresponds to 0, ms1 corresponds to 1ms, ms2 corresponds to 2ms, and so on. The value of 'drx-InactivityTimer' can be set as one of {ms0, ms1, ms2, ms3, ms4, ms5, ms6, ms8, ms10, ms20, ms30, ms40, ms50, ms60, ms80, ms100, ms200, ms300, ms500, ms750, ms1280, ms1920, ms2560}. An example for power saving mode is that the value for 'drx-InactivityTimer' is less than T1 ms, wherein T1 is equal to 1, 2, 4, 6, or 8.

### Reduction of DRX re-transmission timer

Another parameter in IE *'DRX-Config'* is re-transmission timer. If downlink asynchronous HARQ is configured for the UE, the UE is impossible to wait long time to receive the re-transmission data. UE will go to sleep when the DRX re-transmission timer expires. The UE still attends to receive HARQ transmission until DRX re-transmission timer expires. Therefore,a smaller DRX re-transmission timer is beneficial for power saving. The IE *'DRX-Config'* is used to configure DRX related parameters and it includes at least parameter of '*drx-RetransmissionTimerDL*'. Value of '*drx-RetransmissionTimerDL*' is specified in number of slot lengths of where the transport block was transmitted. The value of '*drx-RetransmissionTimerDL*' can be set as one of {sl0, sl1, sl2, sl4, sl6, sl8, sl16, sl24, sl33, sl40, sl64, sl80, sl96, sl112, sl128, sl160, sl320}. Sl0 corresponds to 0 slots, sl1 corresponds to 1 slot, sl2 corresponds to 2 slots, and so on. For uplink HARQ, the parameter of '*drx-RetransmissionTimerUL*' is similar as '*drx-RetransmissionTimerDL*' and they have the same values. An example for power saving mode is that the value for '*drx-RetransmissionTimerDL*' or '*drx-RetransmissionTimerUL*' is less than T2 slots, wherein T2 is equal to 1, 2, 4, 6, or 8.

### Increase of DRX short and long cycles or Reduction of DRX short cycle timer

Another parameter in IE 'DRX-Config' are DRX short cycle as 'drx-ShortCycle', DRX long cycle as 'drx-LongCycleStartOffset' and DRX short cycle timer as 'drx-ShortCycleTimer', as shown in FIG. 10. Value of 'drx-ShortCycle' is specified in ms, such as ms1 corresponds to 1ms, ms2 corresponds to 2ms, and so on. The value of 'drx-ShortCycle' can be set as one of {ms2, ms3, ms4, ms5, ms6, ms7, ms8, ms10, ms14, ms16, ms20, ms30, ms32, ms35, ms40, ms64, ms80, ms128, ms160, ms256, ms320, ms512, ms640}.

DRX long cycle of 'drx-LongCycleStartOffset' is specified in ms and DRX start offset in multiples of 1ms. If DRX short cycle is configured, the value of DRX long cycle shall be a multiple of the DRX short cycle value. The value of DRX long cycle in 'drx-LongCycleStartOffset' can be set as one of {ms10, ms20, ms32, ms40, ms60, ms64, ms70, ms80, ms128, ms160, ms256, ms320, ms512, ms640, ms1024, ms1280, ms2048, ms2560, ms5120, ms10240}.

Value of 'drx-ShortCycleTimer' is specified in multiples of DRX short cycle, such as value of 1 corresponds to 1*DRX short cycle, a value of 2 corresponds to 2 * DRX short cycle and so on. The value of 'drx-ShortCycleTimer' can be set as one of {1...16}.

Longer DRX short cycle, longer DRX long cycle, or smaller DRX short cycle timer is beneficial for power saving. Therefore, in some implementations for power saving mode, the value for DRX short cycle is greater than T3 ms wherein T3 is equal to 8, 10, 14 or 16, the value for DRX long cycle is greater than T4 ms wherein T4 is equal to 32, 64, 128 or 512, or the value for DRX short cycle timer is less than T5 wherein T5 is equal to 4 or 8.

### Enhanced BWP Processing for Power Saving

The enhanced BWP processing for power saving suggest sparser RS configuration for channel tracking, low power BWP and dormant BWP. A UE in RRC (radio recourse control) connected mode is expected to receive the higher layer UE specific configuration of a *'NZP-CSI-RS-ResourceSet'* (non-zero power channel state information reference signal) configured with higher layer parameter '*trs-Info'*. For a frequency range 1, the UE is configured with one or more NZP CSI-RS set(s), where a *'NZP-CSI-RS-ResourceSet'* includes four periodic NZP CSI-RS resources in two consecutive slots with two periodic NZP CSI-RS resources in each slot. For a frequency range 2 the UE may be configured with one or more NZP CSI-RS set(s), where a 'NZP-CSI-RS-ResourceSet' includes two periodic CSI-RS resources in one slot or with a 'NZP-CSI-RS-ResourceSet' of four periodic NZP CSI-RS resources in two consecutive slots with two periodic NZP CSI-RS resources in each slot. The 'CSI-ResourcePeriodicityAndOffset' in *'NZP-CSI-RS-ResourceSet'* can be set as one of {slots4, slots5, slots8, slots10, slots16, slots20, slots32, slots40, slots64, slots80, slots160, slots320, slots640}. Value of 'CSI-ResourcePeriodicityAndOffset' is specified in a corresponding slot. The CSI-RS (channel state information reference signal) can be used for channel tracking. Longer periodicity for reference signal is beneficial for UE power saving. An example for power saving mode is that the value of periodicity in 'CSI-ResourcePeriodicityAndOffset' is greater than T6 slots, wherein T6 is equal to 8, 16, 64, or 320.

It would be also effective for power saving if it is able to put the BWP into power saving state and bring it back quickly. Such BWP can be called 'dormant BWP' where no uplink or downlink grant is allowed (the power consumption for PDCCH monitoring can be saved), but CSI measurement and periodic CSI reporting can continue. The dormant BWP has the smallest bandwidth among the configured BWPs. Thus, an example for power saving mode is that UE is configured into the dormant BWP state.

Low power BWP has the smallest bandwidth among the configured BWPs. In some implementations, CSI measurement and periodic CSI reporting need to be done for low power BWP, and uplink or downlink grant is allowed. Some instance message application (such as WeChat) has small data payload to transmit or to receive. Therefore, the low power BWP can be used with very low power consumption for its very small bandwidth. In an example of low power BWP, the bandwidth is one of 1.25 MHz, 2.5 MHz, or 5 MHz. In another example of low power BWP, its bandwidth is smallest among the configured BWPs. For example, the bandwidths of configured BWPs are {5 MHz, 10 MHz, 15 MHz, 20 MHz}, and the bandwidth of low power BWP is set as 5 MHz. Another example of enhanced BWP processing for power saving, the initial BWP is configured for UE.

### Enhanced CA Processing

The enhanced CA processing for power saving suggests quick SCell activation/deactivation, and dormant SCell.

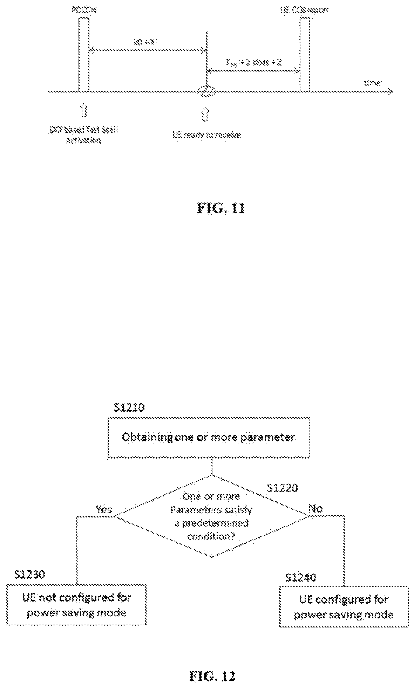

The quick SCell (secondary cell) activation/deactivation allow the number of activated SCell to be able to adapt more closely to the actual traffic loads, thereby saving more power. In LTE, SCell activation latency is quite long (24 to 32 ms). FIG. 11 shows an example of a quick SCell activation/deactivation. In NR, the timeline for SCell activation/deactivation can be optimized with aperiodic TRS/CSI and DCI-based signaling as shown in FIG. 11. If A-TRS (aperiodic tracking reference signal) can be used instead of SSB (Synchronization Signal Block) for measurement purpose, the network may be able to align the timing of aperiodic TRS with UE when UE is ready to receive in target cell. Then only T_{TRS} + 2 slots are needed for the UE to do the measurement and the synchronization. The T_{TRS} can be assumed as 1 or 2 slots to process aperiodic TRS and update loop in a known SCell. Once the UE receives DCI-based fast activation command, only k0 + X latency is needed for PDCCH receiving and the UE RF transition (i.e. X latency) to receive new signaling from target SCell. Finally, the UE performs CQI measurements and reporting within Z latency after the UE starts to receive reference signals. An example for power saving mode is that the quick SCell activation/de-activation is performed based on DCI.

Another example for power saving mode suggests configuring the UE with a dormant SCell state. When a SCell is deactivated, the UE does not have to perform any measurement or operations on the SCell. When the SCell is in the dormant state, however, the UE may perform CQI measurements and reporting, albeit at a much sparser periodicity. The transitioning from the dormant state to the active state is still much shorter than a transitioning from the deactivated state to the active state.

### Enhanced MIMO Processing

The enhanced MIMO processing for power saving comprises one of following: reduction of UE receiving antenna amount, reduction of UE receiving rank amount, reduction of UE receiving antenna panel amount, reduction of UE spatial domain receive filter amount, reduction of UE wave beam group amount, reduction of UE port group amount, reduction of UE antenna group amount, reduction of UE transmitting antenna amount, reduction of UE transmitting rank amount. In some implementations for power saving of CSI measurements, the UE may be configured to measure the channel state with small number of ranks. The number of MIMO ranks can be one of {1, 2, 4, 8}. An example for power saving mode is that the number of CSI ranks measurements is smaller than T7, wherein T7 is equal to 4, or 8. The term of rank can named as 'layer'.

An example for power saving mode of enhanced MIMO Processing, the UE receiving antenna amount is set as a first value. The maximum UE receiving antenna amount is a second value. Wherein, the first value is less than the second value, such as the first value is equal to 4, and the second value is equal to 8, only 4 receiving antennas are enabled and other receiving antennas are disabled for UE. Since the number of UE receiving antenna decreases and simpler / low power baseband processing can be used for UE, which will reduce the UE power consumption. The maximum UE receiving antenna amount can be obtained based on the UE capability reporting.

An example for power saving mode of enhanced MIMO Processing, the UE receiving rank amount is set as a first value. The maximum UE receiving rank amount is a second value. Wherein, the first value is less than the second value, such as the first value is equal to 2, and the second value is equal to 4 for the maximum UE receiving antenna amount of 4, only 2 receiving ranks (or layers) are enabled for receiving data transmission. Since the number of UE receiving rank decreases and simpler / low power baseband processing can be used for UE, which will reduce the UE power consumption. The first value is equal to half of the second value. The maximum UE receiving rank amount can be obtained based on the UE capability reporting.

An example for power saving mode of enhanced MIMO Processing, the UE receiving antenna panel amount is set as a first value. The maximum UE receiving antenna panel amount is a second value. Wherein, the first value is less than the second value, such as the first value is equal to 2, and the second value is equal to 4, only 2 receiving antenna panels are enabled and other receiving antenna panels are disabled for UE. Since the number of UE receiving antenna panel amount decreases and simpler / low power baseband processing can be used for UE, which will reduce the UE power consumption. The first value is equal to half of the second value. The maximum UE receiving antenna panel amount can be obtained based on the UE capability reporting.

An example for power saving mode of enhanced MIMO Processing, the UE spatial domain receive filter amount is set as a first value. The maximum UE spatial domain receive filter amount is a second value. When the first value is less than the second value, such as the first value is equal to 2, and the second value is equal to 4, only 2 spatial domain receive filters are enabled and other spatial domain receive filters are disabled for UE. Since the number of UE spatial domain receive filter amount decreases and simpler / low power baseband processing can be used for UE, which will reduce the UE power consumption. The first value is equal to half of the second value. The maximum UE spatial domain receive filter amount can be obtained based on the UE capability reporting.

An example for power saving mode of enhanced MIMO Processing, the UE wave beam group amount is set as a first value. The maximum UE wave beam group amount is a second value. When the first value is less than the second value, such as the first value is equal to 2, and the second value is equal to 4, only 2 wave beam groups are enabled and other wave beam groups are disabled for UE. Since the number of UE wave beam group amount decreases and simpler / low power baseband processing can be used for UE, which will reduce the UE power consumption. The first value is equal to half of the second value. The maximum UE wave beam group amount can be obtained based on the UE capability reporting.

An example for power saving mode of enhanced MIMO Processing, the_UE port group amount is set as a first value. The maximum UE port group amount is a second value. When the first value is less than the second value, such as the first value is equal to 2, and the second value is equal to 4, only 2 port groups are enabled and other port groups are disabled for UE. Since the number of UE port group amount decreases and simpler / low power baseband processing can be used for UE, which will reduce the UE power consumption. The first value is equal to half of the second value. The maximum UE port group amount can be obtained based on the UE capability reporting.

An example for power saving mode of enhanced MIMO Processing, the UE antenna group amount is set as a first value. The maximum UE antenna group amount is a second value. When the first value is less than the second value, such as the first value is equal to 2, and the second value is equal to 4, only 2 antenna groups are enabled and other antenna groups are disabled for UE. Since the number of UE antenna group amount decreases and simpler / low power baseband processing can be used for UE, which will reduce the UE power consumption. The first value is equal to half of the second value. The maximum UE antenna group amount can be obtained based on the UE capability reporting.

An example for power saving mode of enhanced MIMO Processing, the UE transmitting antenna amount is set as a first value. The maximum UE transmitting antenna amount is a second value. When the first value is less than the second value, such as the first value is equal to 2, and the second value is equal to 4, only 2 transmitting antennas are enabled and other transmitting antennas are disabled for UE. Since the number of UE transmitting antenna amount decreases and simpler / low power baseband processing can be used for UE, which will reduce the UE power consumption. The first value is equal to half of the second value. The maximum UE transmitting antenna amount can be obtained based on the UE capability reporting.

An example for power saving mode of enhanced MIMO Processing, the UE transmitting rank amount is set as a first value. The maximum UE transmitting rank amount is a second value. When the first value is less than the second value, such as the first value is equal to 2, and the second value is equal to 4, only 2 transmitting ranks (layers) are enabled for UE. Since the number of UE transmitting rank amount decreases and simpler / low power baseband processing can be used for UE, which will reduce the UE power consumption. The first value is equal to half of the second value. The maximum UE transmitting rank amount can be obtained based on the UE capability reporting.

### Enhanced PDCCH Monitoring

The enhanced PDCCH monitoring for power saving comprises at least one of following: increase PDCCH monitoring slot periodicity, reduction of PDCCH monitoring slot duration.

An example of enhanced PDCCH monitoring for power saving is described as following. Increase of PDCCH monitoring slot periodicity and reduction of PDCCH monitoring slot duration can be used to reduce the timing ratio of PDCCH monitoring occasion. The parameter of PDCCH monitoring slot periodicity in search space is denoted by '*monitoringSlotPeriodicityAndOffset*', and it defines slots for PDCCH monitoring slot periodicity and offset. '*monitoringSlotPeriodicityAndOffset*' is equal to one of {sl1, sl2, sl4, sl5, sl8, sl10, sl16, sl20, sl40, sl80, sl160, sl320, sl640, sl1280, sl2560}. The parameter of PDCCH monitoring slot duration in search space is denoted by '*duration*'. It defines the number of consecutive slots that a search space lasts in every occasion, i.e., upon every period as given in the periodicityAndOffset. *'duration'* can be configured for an integer greater than 1 and less than PDCCH monitoring slot periodicity minus 1. One example of enhanced PDCCH monitoring for power saving, the PDCCH monitoring slot periodicity is greater than a first value and the PDCCH monitoring slot duration is less than a second value. The first value is equal to one of 40, 160, 320 or 640. The second value is equal to one of 2, 4, 8, 16, or 32.

Various implementations of the disclosed technology will be further discussed with reference to FIG. 12. FIG. 12 shows an example of a power saving scheme based on the disclosed technology. The method suggested in FIG. 12 may be applied to a base station. At 1210, one or more parameters are obtained. At 1220, a determination is made whether the one or more parameters satisfy a predetermined condition. The condition may be varied depending on the parameters obtained. For example, the condition may include whether the parameters obtained at 1210 match information provided by MCS (Modulation Coding Scheme) field. Based on the determination, the UE is configured for the power saving mode (step 1240) or not configured for the power saving mode (step 1230).

As already discussed above, the power saving of the UE can be implemented by at least one of the following: enhanced time domain processing for power saving, enhanced DRX processing for power saving, enhanced BWP processing for power saving, enhanced CA processing for power saving, enhanced MIMO processing for power saving, or enhanced PDCCH monitoring for power saving. The enhanced time domain processing for power saving comprises one of following: cross slot scheduling for PDSCH, multi-slot scheduling, slot aggregation scheduling. The enhanced DRX processing for power saving comprises one of following: reduction of DRX on duration timer, reduction of DRX inactivity timer, reduction of DRX re-transmission timer, increase of DRX short cycle, increase of DRX short cycle, reduction of DRX short cycle timer. The enhanced BWP processing for power saving comprises one of following: RS configuration for channel tracking, and CSI measurements. The enhanced CA processing for power saving comprises one of following: reduction of CSI/RRM measurement, and dormant SCell. The enhanced MIMO processing for power saving comprises one of following: reduction of UE receiving antenna amount, reduction of UE receiving rank amount, reduction of UE receiving antenna panel amount, reduction of UE spatial domain receive filter amount, reduction of UE wave beam group amount, reduction of UE port group amount, reduction of UE antenna group amount, reduction of UE transmitting antenna amount, reduction of UE transmitting rank amount. The enhanced PDCCH monitoring for power saving comprises: reduction of PDCCH monitoring amount.

The specific parameters obtained at 1210 can be varied in many situations. Based on the specific parameters obtained at 1210, the condition of the determination at 1220 can be also varied. Thus, the disclosed technology can provide various implementations to achieve the power saving of the UE by including different specific parameters obtained at 1210 and/or different conditions for the determination at 1220.

### Implementation 1

In this implementation, the parameter obtained at 1210 is a scrambling method configured for PDCCH. At 1220, the scrambling method configured for PDCCH is compared with MCS-C-RNTI. If the scrambling method configured for PDCCH matches information in MCS-C-RNTI, the UE proceeds to 1230 and the power saving mode is not configured for the UE. If the scrambling method configured for PDCCH does not match information in MCS-C-RNTI, the UE proceeds to 1240 and the power saving mode is configured for the UE.

### Implementation 2

In this implementation, the parameter obtained at 1210 may include a scrambling method configured for PDCCH and an actual scrambling method of PDCCH. At 1220, both of the scrambling method configured for PDCCH and the actual scrambling method of PDCCH are compared with the information in the MCS-C-RNTI. The determination made at 1220 may include i) whether the UE is configured with MCS-C-RNTI (scrambling method configured for PDCCH is MCS-C-RNTI), and ii) whether the PDSCH is scheduled by a PDCCH with CRC (Cyclic redundancy check) scrambled by MCS-C-RNTI (actual scrambling method of PDCCH is also MCS-C-RNTI). If it is determined 'Yes' at step 1220, i.e., satisfying both i) and ii), the UE proceeds to 1230 and the UE is not configured for power saving mode. If it is determined 'No' at step 1220, i.e., not satisfying at least one of i) and ii), the UE proceeds to 1240 and the UE is configured for power saving mode.

### Implementation 3

In this implementation, the parameter obtained at 1210 may include a scrambling method configured for PDCCH, an actual scrambling method of PDCCH, and PDSCH configuration. In some implementations, PDSCH configuration comprises MCS table. The determination made at 1220 may include i) whether the UE is not configured with MCS-C-RNTI (scrambling method configured for PDCCH is not MCS-C-RNTI), ii) whether the higher layer parameter '*mcs-Table'* given by *'PDSCH-Config'* is set to 'qam64LowSE' (the MCS table in PDSCH configuration is 'qam64LowSE'), and iii) whether the PDSCH is scheduled by a PDCCH in a UE specific search space with CRC scrambled by C-RNTI (actual scrambling method of PDCCH is C-RNTI). If it is determined 'Yes' at step 1220, i.e., satisfying i) to iii), the UE proceeds to 1230 and the UE is not configured for power saving mode. If it is determined 'No' at step 1220, i.e., not satisfying at least one of i) to iii), the UE proceeds to 1240 and the UE is configured for power saving mode.

### Implementation 4

In this implementation, the parameter obtained at 1210 may include a semi persistent scheduling configuration, and an actual scrambling method of PDCCH. In some implementations, the semi persistent scheduling configuration comprises MCS table. The determination made at 1220 may include i) whether the UE is configured with the higher layer parameter *'mcs-Table'* given by *'SPS-config'* (semi persistent scheduling configuration) set to 'qam64LowSE' (MCS table in semi persistent scheduling configuration is 'qam64LowSE'), ii) whether the PDSCH is scheduled by a PDCCH with CRC scrambled by CS-RNTI (actual scrambling method of PDCCH is CS-RNTI), and iii) if the PDSCH is scheduled without corresponding PDCCH transmission using *'SPS-config'.* If satisfying i) and ii) or satisfying i) and iii), the UE proceeds to 1230 and the UE is not configured for power saving mode. Otherwise, the UE proceeds to 1240 and the UE is configured for power saving mode.

### Implementation 5

In this implementation, the parameter obtained at 1210 may include a scrambling method configured for PDCCH, an actual scrambling method of PDCCH, PUSCH configuration, uplink OFDM waveform, and search space. In some implementations, PUSCH configuration comprises MCS table and search space comprises search space type. The determination made at 1220 may include i) whether transform precoding is disabled for this PUSCH transmission (uplink OFDM waveform is not transform precoding OFDM), ii) whether the UE is not configured with MCS-C-RNTI (scrambling method configured for PDCCH is not MCS-C-RNTI), *'mcs-Table'* in *'PUSCH-Config'* is set to 'qam64LowSE' (the MCS table in PUSCH configuration is 'qam64LowSE'), iii) whether the PUSCH is scheduled with C-RNTI or SP-CSI-RNTI (actual scrambling method of PDCCH is C-RNTI or SP-CSI-RNTI), and iv) the PUSCH is assigned by a PDCCH in a UE specific search space (the search space type is UE specific search space). If satisfying i) to iv), the UE proceeds to 1230 and the UE is not configured for power saving mode. Otherwise, the UE proceeds to 1240 and the UE is configured for power saving mode.

### Implementation 6

In this implementation, the parameter obtained at 1210 may include a scrambling method configured for PDCCH, an actual scrambling method of PDCCH, and uplink OFDM waveform. The determination made at 1220 may include i) whether transform precoding is disabled for this PUSCH transmission (uplink OFDM waveform is not transform precoding OFDM), ii) whether the UE is configured with MCS-C-RNTI (scrambling method configured for PDCCH is MCS-C-RNTI), and iii) whether the PUSCH is scheduled with MCS-C-RNTI (actual scrambling method of PDCCH is MCS-C-RNTI). If satisfying i) to iii), the UE proceeds to 1230 and the UE is not configured for power saving mode. Otherwise, the UE proceeds to 1240 and the UE is configured for power saving mode.

### Implementation 7

In this implementation, the parameter obtained at 1210 may include grant configuration, uplink OFDM waveform, and an actual scrambling method of PDCCH. In some implementations, grant configuration comprises MCS table. The determination made at 1220 may include i) whether transform precoding is disabled for this PUSCH transmission (uplink OFDM waveform is not transform precoding OFDM), ii) whether *'mcs-Table'* in *'ConfiguredGrantConfig'* is set to 'qam64LowSE' (MCS table in grant configuration is 'qam64LowSE'), and iii) whether PUSCH is scheduled with CS-RNTI (actual scrambling method of PDCCH is CS-RNTI). If satisfying i) to iii), the UE proceeds to 1230 and the UE is not configured for power saving mode. Otherwise, the UE proceeds to 1240 and the UE is configured for power saving mode.

### Implementation 8

In this implementation, the parameter obtained at 1210 may include a scrambling method configured for PDCCH, an actual scrambling method of PDCCH, PUSCH configuration, uplink OFDM waveform, and search space. In some implementations, search space comprises search space type. The determination made at 1220 may include i) whether transform precoding is enabled for this PUSCH transmission (uplink OFDM waveform is transform precoding OFDM), ii) whether the UE is not configured with MCS-C-RNTI (scrambling method configured for PDCCH is not MCS-C-RNTI), iii) whether '*mcs-TableTransformPrecoder'* in *'PUSCH-Config'* is set to 'qam64LowSE' (MCS table in PUSCH configuration is 'qam64LowSE'), iv) whether the PUSCH is scheduled with C-RNTI or SP-CSI-RNTI (actual scrambling method of PDCCH is C-RNTI or SP-CSI-RNTI), and v) whether the PUSCH is assigned by a PDCCH in a UE specific search space (the search space type is UE specific search space). If satisfying i) to v), the UE proceeds to 1230 and the UE is not configured for power saving mode. Otherwise, the UE proceeds to 1240 and the UE is configured for power saving mode.

### Implementation 9

In this implementation, the parameter obtained at 1210 may include uplink OFDM waveform, scrambling method configured for PDCCH, and actual scrambling method of PDCCH. The determination made at 1220 may include i) whether transform precoding is enabled for this PUSCH transmission (uplink OFDM waveform is transform precoding OFDM), ii) whether the UE is configured with MCS-C-RNTI (scrambling method configured for PDCCH is MCS-C-RNTI), and iii) whether the PUSCH is scheduled with MCS-C-RNTI (actual scrambling method of PDCCH is MCS-C-RNT). If satisfying i) to iii), the UE proceeds to 1230 and the UE is not configured for power saving mode. Otherwise, the UE proceeds to 1240 and the UE is configured for power saving mode.

### Implementation 10

In this implementation, the parameter obtained at 1210 may include uplink OFDM waveform, grant configuration, and actual scrambling method of PDCCH. In some implementations, grant configuration comprises MCS table. The determination made at 1220 may include i) whether transform precoding is enabled for this PUSCH transmission (uplink OFDM waveform is transform precoding OFDM), ii) whether '*mcs-TableTransformPrecoder'* in '*ConfiguredGrantConfig'* is set to 'qam64LowSE' (MCS table in grant configuration is 'qam64LowSE'), and iii) whether PUSCH is scheduled with CS-RNTI (actual scrambling method of PDCCH is CS-RNTI). If satisfying i) to iii), the UE proceeds to 1230 and the UE is not configured for power saving mode. Otherwise, the UE proceeds to 1240 and the UE is configured for power saving mode.

### Implementation 11

In this implementation, the parameter obtained at 1210 may include CSI report configuration. In some implementations, CSI report configuration comprises CQI table. The determination made at 1220 may include whether the higher layer parameter *'cqi-Table'* in '*CSI-ReportConfig'* configures 'table3' (CQI table in CSI report configuration is 'table3'). If it is determined that the higher layer parameter *'cqi-Table'* in *'CSI-ReportConfig'* configures 'table3', the UE proceeds to 1230 and the UE is not configured for power saving mode. Otherwise, the UE proceeds to 1240 and the UE is configured for power saving mode.

### Implementation 12

In this implementation, the parameter obtained at 1210 may include uplink OFDM waveform. The determination made at 1220 may include whether transform precoding is enabled for this PUSCH transmission (uplink OFDM waveform is transform precoding OFDM). If it is determined that transform precoding is enabled for this PUSCH transmission, the UE proceeds to 1230 and the UE is not configured for power saving mode. Otherwise, the UE proceeds to 1240 and the UE is configured for power saving mode.

### Implementation 13

In this implementation, the parameter obtained at 1210 may include PUSCH configuration. In some implementations, the PUSCH configuration comprises following parameter: start symbol & length of PUSCH. The determination made at 1220 may include i) whether the allocation length of OFDM symbols (L) indicated by start symbol & length of PUSCH is less than a first threshold value, ii) whether the start symbols index (S) indicated by start symbol & length of PUSCH is less than a second threshold value. If satisfying i), or satisfying ii), or satisfying i) and ii), the UE proceeds to 1230 and the UE is not configured for power saving mode. Otherwise, the UE proceeds to 1240 and the UE is configured for power saving mode. The first threshold value is one of 3, 4, 5, 6, 7, or 8. The second threshold value is one of 1, 2, 3, 4, 5, 6, 7, or 8.

### Implementation 14

In this implementation, the parameter obtained at 1210 may include PDSCH configuration. In some implementations, the PDSCH configuration comprises following parameter: start symbol & length of PDSCH, and PDSCH aggregation factor. The determination made at 1220 may include i) whether the allocation length of OFDM symbols (L) indicated in start symbol & length of PDSCH is less than a first threshold value, ii) whether the start symbols index (S) indicated by start symbol & length of PDSCH is less than a second threshold value, iii) whether the PDSCH aggregation factor is less than a third threshold value. If satisfying i), or satisfying ii), or satisfying iii), or satisfying i) and ii), or satisfying i) and iii), or satisfying ii) and iii), the UE proceeds to 1230 and the UE is not configured for power saving mode. Otherwise, the UE proceeds to 1240 and the UE is configured for power saving mode. The first threshold value is one of 3, 4, 5, 6, 7, or 8. The second threshold value is one of 1, 2, 3, 4, 5, 6, 7, or 8. The third threshold value is one of 2 or 4.

### Implementation 15

In this implementation, the parameter obtained at 1210 may include DCI format. In some implementations, the DCI format comprises at least one of following parameters: DCI format 0_0,DCI format 0_1, DCI format 1_0, DCI format 1_1, DCI format 2_0, DCI format 2_1, DCI format 2_2, DCI format 2_3. The determination made at 1220 may include i) whether the DCI format is DCI format 0_0,and ii) whether the DCI format is DCI format 1_0. If satisfying i), or satisfying ii), the UE proceeds to 1240 and the UE is configured for power saving mode. Otherwise, the UE proceeds to 1230 and the UE is not configured for power saving mode.

### Implementation 16

In this implementation, the parameter obtained at 1210 may include search space. In some implementations, the search space comprises at least one of following parameters: search space type, PDCCH monitoring slot periodicity, PDCCH monitoring slot duration. The determination made at 1220 may include i) whether the search space type is common search space, ii) whether the PDCCH monitoring slot periodicity is less than a first threshold value, and iii) whether the PDCCH monitoring slot duration is larger than a second threshold value. If satisfying i), or satisfying ii), or satisfying iii), or satisfying ii) and iii), the UE proceeds to 1230 and the UE is not configured for power saving mode. Otherwise, the UE proceeds to 1240 and the UE is configured for power saving mode. The first threshold value is one of 40, 160, 320 or 640. The second threshold value is one of 2, 4, 8, 16, 32, or 64.

### Implementation 17

In this implementation, the parameter obtained at 1210 may include aggregation level. In some implementations, the aggregation level comprises at least one of following parameters: 1, 2, 4, 8, 16. The determination made at 1220 may include whether the aggregation level is greater than a threshold value. If the aggregation level is greater than the threshold value, the UE proceeds to 1230 and the UE is not configured for power saving mode. Otherwise, the UE proceeds to 1240 and the UE is configured for power saving mode. The threshold value is 2 or 4.

### Implementation 18

In this implementation, the parameter obtained at 1210 may include subcarrier spacing. In some implementations, the subcarrier spacing comprises at least one of following parameters: 15 kHz, 30 kHz, 60 kHz, 120 kHz, 240 kHz, 480 kHz. The different subcarrier spacings can be denoted by a parameter of *µ*, wherein *µ* equals to 0 for 15 kHz, *µ* equals to 1 for 30 kHz, *µ* equals to 2 for 60 kHz, *µ* equals to 3 for 120 kHz, *µ* equals to 4 for 240 kHz, *µ* equals to 5 for 480 kHz. The determination made at 1220 may include whether the subcarrier spacing is larger than a first threshold value (or *µ* is larger than a second threshold value). If the subcarrier spacing is greater than the first threshold value (or *µ* is larger than a second threshold value), the UE proceeds to 1230 and the UE is not configured for power saving mode. Otherwise, the UE proceeds to 1240 and the UE is configured for power saving mode. The threshold value is 15 kHz, 30 kHz, or 60 kHz (second threshold value is 0, 1, or 2).

### Implementation 19

In this implementation, the parameter obtained at 1210 may include frequency range. In some implementations, the frequency range comprises at least one of following parameters: FR1 (frequency range 1 for carrier frequency smaller than 6 GHz or sub-6 GHz) and FR2 (frequency range 2 for carrier frequency larger than 6 GHz). Sub 6 Ghz range is called FR1 and millimeter wave range is called FR2, and Table 5 shows a specific definition of frequency ranges. The determination made at 1220 may include whether the frequency range is FR2. If the frequency range is FR2, the UE proceeds to 1230 and the UE is not configured for power saving mode. Otherwise, the UE proceeds to 1240 and the UE is configured for power saving mode.

**Table 5 Definition of frequency ranges**

| **Frequency range designation** | **Corresponding frequency range** |
|---|---|
| FR1 | 450 MHz - 6000 MHz |
| FR2 | 24250 MHz - 52600 MHz |

### Implementation 20

In this implementation, the parameter obtained at 1210 may include uplink OFDM waveform. In some implementations, the uplink OFDM waveform comprises at least one of following parameters: cyclic prefix OFDM, transform precoding OFDM. The determination made at 1220 may include whether the uplink OFDM waveform is transform precoding OFDM. If the uplink OFDM waveform is transform precoding OFDM, the UE proceeds to 1240 and the UE is configured for power saving mode. Otherwise, the UE proceeds to 1230 and the UE is not configured for power saving mode.

### Implementation 21

In this implementation, the parameter obtained at 1210 may include DCI format. In some implementations, the DCI format comprises at least one of following parameters: DCI format 0_0, DCI format 0_1, DCI format 1_0, DCI format 1_1, DCI format 2_0, DCI format 2_1, DCI format 2_2, DCI format 2_3. The determination made at 1220 may include whether the DCI format is DCI format 0_0 or DCI format 1_0. If the DCI format is DCI format 0_0 or DCI format 1_0, the UE proceeds to 1240 and the UE is configured for power saving mode. Otherwise, the UE proceeds to 1230 and the UE is not configured for power saving mode.

### Implementation 22

In this implementation, the parameter obtained at 1210 may include control resource set. In some implementations, the control resource set comprises at least one of following parameters: frequency domain resource, duration, precoder granularity. The determination made at 1220 may include i) whether the total number of '1' in frequency domain resource is less than a first threshold value, ii) whether the duration is less than a second threshold value, and iii) whether the precoder granularity is set as *'sameAsREG-bundle'.* If satisfying i), or satisfying ii), or satisfying iii), or satisfying i) and iii), or satisfying ii) and iii), the UE proceeds to 1240 and the UE is configured for power saving mode. Otherwise, the UE proceeds to 1230 and the UE is not configured for power saving mode. The first threshold value is one of 2, 4, 8, 12, or 16. The second threshold value is one of 2, 3, or 4. Frequency domain resources for the CORESET (control resource set). Each bit corresponds a group of 6 RBs, with grouping starting from the first RB group in the BWP. The first (left-most / most significant) bit corresponds to the first RB group in the BWP, and so on. A bit that is set to 1 indicates that this RB group belongs to the frequency domain resource of this CORESET. Bits corresponding to a group of RBs not fully contained in the bandwidth part within which the CORESET is configured are set to zero. And, the duration is defined as Contiguous time duration of the CORESET in number of symbols.

### Implementation 23

In this implementation, the parameter obtained at 1210 may include PDCCH candidates. In some implementations, the PDCCH candidates comprises at least one of following parameters: number of candidates for aggregation level 1, number of candidates for aggregation level 2, number of candidates for aggregation level 4, number of candidates for aggregation level 8, number of candidates for aggregation level 16. The determination made at 1220 may include whether the number of candidates for aggregation level 1 (or 2, or 4, or 8, or 16) is less than a threshold value. If the number of candidates for aggregation level 1 (or 2, or 4, or 8, or 16) is less than a threshold value, the UE proceeds to 1240 and the UE is configured for power saving mode. Otherwise, the UE proceeds to 1230 and the UE is not configured for power saving mode. The threshold value is 16, 24, or 32.

### Implementation 24

In this implementation, the parameter obtained at 1210 may include CSI configuration. It configures a semi-persistent or aperiodic report sent on PUSCH triggered by DCI received on the cell. In some implementations, the CSI configuration comprises at least one of following parameters: report configuration type, CSI reporting band, and CSI report periodicity. The determination made at 1220 may include i) whether the report configuration type is set as '*aperiodic*', ii) whether the CSI report periodicity is larger than a first threshold value, and iii) whether the number of CSI reporting band is less than a second value. If satisfying i), or satisfying ii), or satisfying iii), or satisfying i) and iii), or satisfying ii) and iii), the UE proceeds to 1240 and the UE is configured for power saving mode. Otherwise, the UE proceeds to 1230 and the UE is not configured for power saving mode. The first threshold value is one of 20, 40, or 80. The second threshold value is one of 6, 8, or 10. CSI reporting band Indicates a contiguous or non-contiguous subset of subbands in the bandwidth part which CSI shall be reported for. Each bit in the bit-string represents one subband. The right-most bit in the bit string represents the lowest subband in the BWP. The choice determines the number of subbands (subbands3 for 3 subbands, subbands4 for 4 subbands, and so on). CSI report periodicity is specified in slot.

It is intended that the specification, together with the drawings, be considered exemplary only, where exemplary means an example and, unless otherwise stated, does not imply an ideal or a preferred embodiment. As used herein, the use of "or" is intended to include "and/or", unless the context clearly indicates otherwise.

Some of the embodiments described herein are described in the general context of methods or processes, which may be implemented in one embodiment by a computer program product, embodied in a computer-readable medium, including computer-executable instructions, such as program code, executed by computers in networked environments. A computer-readable medium may include removable and non-removable storage devices including, but not limited to, Read Only Memory (ROM), Random Access Memory (RAM), compact discs (CDs), digital versatile discs (DVD), etc. Therefore, the computer-readable media can include a non-transitory storage media. Generally, program modules may include routines, programs, objects, components, data structures, etc. that perform particular tasks or implement particular abstract data types. Computer- or processor-executable instructions, associated data structures, and program modules represent examples of program code for executing steps of the methods disclosed herein. The particular sequence of such executable instructions or associated data structures represents examples of corresponding acts for implementing the functions described in such steps or processes.

Some of the disclosed embodiments can be implemented as devices or modules using hardware circuits, software, or combinations thereof. For example, a hardware circuit implementation can include discrete analog and/or digital components that are, for example, integrated as part of a printed circuit board. Alternatively, or additionally, the disclosed components or modules can be implemented as an Application Specific Integrated Circuit (ASIC) and/or as a Field Programmable Gate Array (FPGA) device. Some implementations may additionally or alternatively include a digital signal processor (DSP) that is a specialized microprocessor with an architecture optimized for the operational needs of digital signal processing associated with the disclosed functionalities of this application. Similarly, the various components or sub-components within each module may be implemented in software, hardware or firmware. The connectivity between the modules and/or components within the modules may be provided using any one of the connectivity methods and media that is known in the art, including, but not limited to, communications over the Internet, wired, or wireless networks using the appropriate protocols.

## Claims

1. A wireless communication method, including:
configuring, by a network device (120), one or more parameters of a user equipment, UE (111, 112, 113), that include a scrambling method configured for a physical downlink control channel, PDCCH; and
determining, by the network device, whether the scrambling method configured for the PDCCH matches information in a modulation and coding scheme-cell radio network temporary identifier, MCS-C-RNTI; and
in response to determining that the scrambling method configured for the PDCCH does not match the information in the MCS-C-RNTI, configuring the UE (111, 112, 113) in a power saving mode by transmitting configuration information including the one or more parameters to the UE (111, 112, 113),
wherein the configuration information configures the UE (111, 112, 113) to perform an enhanced multiple input multiple output, MIMO, processing mode in the power saving mode by setting a UE (111, 112, 113) transmitting rank amount to a first value that is less than a maximum UE transmitting rank amount.

2. The wireless communication method of claim 1, wherein the enhanced MIMO processing mode satisfies at least one of following conditions:
i) a UE (111, 112, 113) receiving rank amount is less than a maximum UE receiving rank that is obtained based on a UE capability reporting,
ii) a UE (111, 112, 113) receiving antenna panel amount is less than a maximum UE receiving antenna panel amount, or
iii) a UE transmitting antenna amount is less than a maximum UE transmitting antenna amount.

3. The wireless communication method of claim 1, wherein the UE (111, 112, 113) transmitting rank amount is equal to 2, and the maximum UE transmitting rank amount is equal to 4.

4. The wireless communication method of claim 1, wherein the one or more parameters of the UE (111, 112, 113) further include a modulation coding scheme, MCS, table in a physical downlink shared channel, PDSCH, configuration,
wherein the MCS table in the PDSCH configuration is not 'qam64LowSE'.

5. The wireless communication method of claim 1, wherein the one or more parameters of the UE (111, 112, 113) further include a search space type,
wherein the search space type is different from a UE (111, 112, 113) specific search space.

6. The wireless communication method of claim 1, wherein the one or more parameters of the UE (111, 112, 113) further include a channel quality indicator, CQI, table in a channel state information, CSI, report configuration,
wherein the CQI table in the CSI report configuration is 'table3'.

7. The wireless communication method of claim 1, wherein the one or more parameters of the UE (111, 112, 113) further include a start symbol and length in a PUSCH configuration or a PDSCH configuration,
wherein a length L of orthogonal frequency division multiplexing, OFDM, symbols indicated by the start symbol and length is less than a first threshold value, and/or start symbols index S indicated by the start symbol and length is less than a second threshold value, and
wherein the first threshold value is one of 3, 4, 5, 6, 7, or 8, and the second threshold value is one of 1, 2, 3, 4, 5, 6, 7, or 8.

8. The wireless communication method of claim 1, wherein the one or more parameters of the UE (111, 112, 113) further include at least one of i) an aggregation level that is not greater than a threshold value equal to 2 or 4, or ii) a frequency range that is different from FR2.

9. A wireless communication method, including:
receiving, by a user equipment, UE (111, 112, 113), from a network device (120), configuration information that is configured by the network device (120) and includes one or more parameters of the UE (111, 112, 113) that include a scrambling method configured for a physical downlink control channel, PDCCH, wherein the configuration information is configured by the network device based on a determination that the scrambling method configured for the PDCCH does not match information in a modulation and coding scheme-cell radio network temporary identifier, MCS-C-RNTI; and
operating, in response to receiving of the configuration information, in a power saving mode, wherein the operating in the power saving mode includes performing an enhanced multiple input multiple output, MIMO, processing mode by using a UE (111, 112, 113) transmitting rank amount to a first value that is less than a maximum UE transmitting rank amount.

10. The wireless communication method of claim 9, wherein the enhanced MIMO processing mode satisfies at least one of following conditions:
i) a UE (111, 112, 113) receiving rank amount is less than a maximum UE receiving rank that is obtained based on a UE capability reporting,
ii) a UE (111, 112, 113) receiving antenna panel amount is less than a maximum UE receiving antenna panel amount, or
iii) a UE transmitting antenna amount is less than a maximum UE transmitting antenna amount.

11. The wireless communication method of claim 9, wherein the UE (111, 112, 113) transmitting rank amount is equal to 2, and the maximum UE transmitting rank amount is equal to 4.

12. The wireless communication method of claim 9, wherein the one or more parameters of the UE (111, 112, 113) further include a modulation coding scheme, MCS, table in a physical downlink shared channel, PDSCH, configuration,
wherein the MCS table in the PDSCH configuration is not 'qam64LowSE'.

13. The wireless communication method of claim 9, wherein the one or more parameters of the UE (111, 112, 113) further include a search space type,
wherein the search space type is different from a UE (111, 112, 113) specific search space.

14. The wireless communication method of claim 9, wherein the one or more parameters of the UE (111, 112, 113) further include a channel quality indicator, CQI, table in a channel state information, CSI, report configuration,
wherein the CQI table in the CSI report configuration is 'table3'.

15. The wireless communication method of claim 9, wherein the one or more parameters of the UE (111, 112, 113) further include a start symbol and length in a PUSCH configuration or a PDSCH configuration,
wherein a length L of orthogonal frequency division multiplexing OFDM symbols indicated by the start symbol and length is less than a first threshold value, and/or start symbols index S indicated by the start symbol and length is less than a second threshold value, and
wherein the first threshold value is one of 3, 4, 5, 6, 7, or 8, and the second threshold value is one of 1, 2, 3, 4, 5, 6, 7, or 8.

16. The wireless communication method of claim 9, wherein the one or more parameters of the UE (111, 112, 113) further include at least one of i) an aggregation level that is not greater than a threshold value equal to 2 or 4, or ii) a frequency range that is different from FR2.

## Patentansprüche

1. Drahtloses Kommunikationsverfahren, einschließlich:
Konfigurieren, durch eine Netzwerkvorrichtung (120), eines oder mehrerer Parameter eines Benutzergeräts, UE (111, 112, 113), die ein Verwürfelungsverfahren einschließen, das für einen physikalischen Downlink-Steuerkanal, PDCCH, konfiguriert ist; und
Bestimmen, durch die Netzwerkvorrichtung, ob das für den PDCCH konfigurierte Verwürfelungsverfahren mit Informationen in einem temporären Modulations- und Codierungsschema-Zellfunknetzwerk-Identifikator, MCS-C-RNTI, übereinstimmt; und
als Reaktion auf das Bestimmen, dass das für den PDCCH konfigurierte Verwürfelungsverfahren nicht mit den Informationen in dem MCS-C-RNTI übereinstimmt, Konfigurieren des UE (111, 112, 113) in einem Energiesparmodus durch Übertragen von Konfigurationsinformationen, die den einen oder die mehreren Parameter einschließen, an das UE (111, 112, 113),
wobei die Konfigurationsinformationen das UE (111, 112, 113) konfigurieren, um einen erweiterten Mehrfach-Eingabe-Mehrfach-Ausgabe-, MIMO-, Verarbeitungsmodus, in dem Energiesparmodus durch Einstellen eines UE (111, 112, 113)-Übertragungsrangbetrags auf einen ersten Wert, der kleiner als ein maximaler UE-Übertragungsrangbetrags ist, durchzuführen.

2. Drahtloses Kommunikationsverfahren nach Anspruch 1, wobei der erweiterte MIMO-Verarbeitungsmodus mindestens eine der folgenden Bedingungen erfüllt:
i) ein UE (111, 112, 113)-Empfangsrangbetrag ist kleiner als ein maximaler UE-Empfangsrang, der basierend auf einer UE-Fähigkeitsmeldung erhalten wird,
ii) ein UE (111, 112, 113)-Empfangsantennenfeldbetrag ist kleiner als ein maximaler UE-Empfangsantennenfeldbetrag, oder
iii) ein UE-Übertragungsantennenbetrag ist kleiner als ein maximaler UE-Übertragungsantennenbetrag.

3. Drahtloses Kommunikationsverfahren nach Anspruch 1, wobei der UE (111, 112, 113)-Übertragungsrangbetrag gleich 2 ist und der maximale UE-Übertragungsrangbetrag gleich 4 ist.

4. Drahtloses Kommunikationsverfahren nach Anspruch 1, wobei der eine oder die mehreren Parameter des UE (111, 112, 113) ferner eine Modulationscodierungsschema-, MCS-, Tabelle, in einer gemeinsam genutzten physikalischen Downlink-Kanal-, PDSCH-, Konfiguration einschließen,
wobei die MCS-Tabelle in der PDSCH-Konfiguration nicht 'qam64LowSE' ist.

5. Drahtloses Kommunikationsverfahren nach Anspruch 1, wobei der eine oder die mehreren Parameter des UE (111, 112, 113) ferner einen Suchraumtyp einschließen,
wobei der Suchraumtyp sich von einem UE(111, 112, 113)-spezifischen Suchraum unterscheidet.

6. Drahtloses Kommunikationsverfahren nach Anspruch 1, wobei der eine oder die mehreren Parameter des UE (111, 112, 113) ferner eine Kanalqualitätsindikator-, CQI-, Tabelle, in einer Kanalzustandsinformations-, CSI-, Berichtskonfiguration, einschließen,
wobei die CQI-Tabelle in der CSI-Berichtskonfiguration 'table3' ist.

7. Drahtloses Kommunikationsverfahren nach Anspruch 1, wobei der eine oder die mehreren Parameter des UE (111, 112, 113) ferner ein Startsymbol und eine Länge in einer PUSCH-Konfiguration oder einer PDSCH-Konfiguration einschließen,
wobei eine Länge L von orthogonalen Frequenzmultiplex-, OFDM-, Symbolen, die durch das Startsymbol und die Länge angegeben wird, kleiner als ein erster Grenzwert ist, und/oder ein Startsymbolindex S, der durch das Startsymbol und die Länge angegeben wird, kleiner als ein zweiter Grenzwert ist, und
wobei der erste Grenzwert einer von 3, 4, 5, 6, 7 oder 8 ist und der zweite Grenzwert einer von 1, 2, 3, 4, 5, 6, 7 oder 8 ist.

8. Drahtloses Kommunikationsverfahren nach Anspruch 1, wobei der eine oder die mehreren Parameter des UE (111, 112, 113) ferner mindestens eines von i) einer Aggregationsstufe, die nicht größer als ein Grenzwert gleich 2 oder 4 ist, oder ii) einem Frequenzbereich, der sich von FR2 unterscheidet, einschließen.

9. Drahtloses Kommunikationsverfahren, einschließlich:
Empfangen, durch ein Benutzergerät, UE (111, 112, 113), von einer Netzwerkvorrichtung (120), von Konfigurationsinformationen, die durch die Netzwerkvorrichtung (120) konfiguriert sind und einen oder mehrere Parameter des UE (111, 112, 113) einschließen, die ein Verwürfelungsverfahren einschließen, das für einen physikalischen Downlink-Steuerkanal, PDCCH, konfiguriert ist, wobei die Konfigurationsinformationen durch die Netzwerkvorrichtung basierend auf einer Bestimmung konfiguriert sind, dass das für den PDCCH konfigurierte Verwürfelungsverfahren nicht mit Informationen in einem temporären Modulations- und Codierungsschema-Zellfunknetzwerk-Identifikator, MCS-C-RNTI, übereinstimmt; und
Arbeiten, als Reaktion auf das Empfangen der Konfigurationsinformationen, in einem Energiesparmodus, wobei das Arbeiten in dem Energiesparmodus das Durchführen eines erweiterten Mehrfach-Eingabe-Mehrfach-Ausgabe-, MIMO-, Verarbeitungsmodus, einschließt, durch Verwenden eines UE (111, 112, 113)-Übertragungsrangbetrags mit einem ersten Wert, der kleiner als ein maximaler UE-Übertragungsrangbetrag ist.

10. Drahtloses Kommunikationsverfahren nach Anspruch 9, wobei der erweiterte MIMO-Verarbeitungsmodus mindestens eine der folgenden Bedingungen erfüllt:
i) ein UE (111, 112, 113)-Empfangsrangbetrag ist kleiner als ein maximaler UE-Empfangsrang, der basierend auf einer UE-Fähigkeitsmeldung erhalten wird,
ii) ein UE (111, 112, 113)-Empfangsantennenfeldbetrag ist kleiner als ein maximaler UE-Empfangsantennenfeldbetrag, oder
iii) ein UE-Übertragungsantennenbetrag ist kleiner als ein maximaler UE-Übertragungsantennenbetrag.

11. Drahtloses Kommunikationsverfahren nach Anspruch 9, wobei der UE (111, 112, 113)-Übertragungsrangbetrag gleich 2 ist und der maximale UE-Übertragungsrangbetrag gleich 4 ist.

12. Drahtloses Kommunikationsverfahren nach Anspruch 9, wobei der eine oder die mehreren Parameter des UE (111, 112, 113) ferner eine Modulationscodierungsschema-, MCS-, Tabelle, in einer gemeinsam genutzten physikalischen Downlink-Kanals-, PDSCH-, Konfiguartion einschließen,
wobei die MCS-Tabelle in der PDSCH-Konfiguration nicht 'qam64LowSE' ist.

13. Drahtloses Kommunikationsverfahren nach Anspruch 9, wobei der eine oder die mehreren Parameter des UE (111, 112, 113) ferner einen Suchraumtyp einschließen,
wobei der Suchraumtyp sich von einem UE (111, 112, 113)-spezifischen Suchraum unterscheidet.

14. Drahtloses Kommunikationsverfahren nach Anspruch 9, wobei der eine oder die mehreren Parameter des UE (111, 112, 113) ferner eine Kanalqualitätsindikator-, CQI-, Tabelle, in einer Kanalzustandsinformations-, CSI-, Berichtskonfiguration, einschließen,
wobei die CQI-Tabelle in der CSI-Berichtskonfiguration 'table3' ist.

15. Drahtloses Kommunikationsverfahren nach Anspruch 9, wobei der eine oder die mehreren Parameter des UE (111, 112, 113) ferner ein Startsymbol und eine Länge in einer PUSCH-Konfiguration oder einer PDSCH-Konfiguration einschließen,
wobei eine Länge L von orthogonalen Frequenzmultiplex-, OFDM-, Symbolen, die durch das Startsymbol und die Länge angegeben wird, kleiner als ein erster Grenzwert ist, und/oder ein Startsymbolindex S, der durch das Startsymbol und die Länge angegeben wird, kleiner als ein zweiter Grenzwert ist, und
wobei der erste Grenzwert einer von 3, 4, 5, 6, 7 oder 8 ist und der zweite Grenzwert einer von 1, 2, 3, 4, 5, 6, 7 oder 8 ist.

16. Drahtloses Kommunikationsverfahren nach Anspruch 9, wobei der eine oder die mehreren Parameter des UE (111, 112, 113) ferner mindestens eines von i) einer Aggregationsstufe, die nicht größer als ein Grenzwert gleich 2 oder 4 ist, oder ii) einem Frequenzbereich, der sich von FR2 unterscheidet, einschließen.

## Revendications

1. Procédé de communication sans fil, comportant :
la configuration, par un dispositif de réseau (120), d'un ou plusieurs paramètres d'un équipement utilisateur, UE (111, 112, 113), qui comportent un procédé d'embrouillage configuré pour un canal de commande de liaison descendante physique, PDCCH ; et
le fait de déterminer, par le dispositif de réseau, si le procédé d'embrouillage configuré pour le PDCCH correspond ou non à des informations dans un identifiant temporaire de réseau radio cellulaire de schéma de modulation et de codage, MCS-C-RNTI ; et
en réponse au fait de déterminer que le procédé d'embrouillage configuré pour le PDCCH ne correspond pas aux informations dans le MCS-C-RNTI, la configuration de l'UE (111, 112, 113) dans un mode d'économie d'énergie par transmission d'informations de configuration comportant le ou les paramètres à l'UE (111, 112, 113),
dans lequel les informations de configuration configurent l'UE (111, 112, 113) pour réaliser un mode de traitement à entrées multiples sorties multiples, MIMO, amélioré dans le mode d'économie d'énergie en réglant une quantité de rang d'émission d'UE (111, 112, 113) à une première valeur qui est inférieure à une quantité maximale de rang d'émission d'UE.

2. Procédé de communication sans fil selon la revendication 1, dans lequel le mode de traitement MIMO amélioré satisfait à au moins l'une parmi des conditions suivantes :
i) une quantité de rang de réception d'UE (111, 112, 113) est inférieure à un rang maximal de réception d'UE qui est obtenu sur la base d'un rapport de capacité d'UE,
ii) une quantité de panneaux d'antenne de réception d'UE (111, 112, 113) est inférieure à une quantité maximale de panneaux d'antenne de réception d'UE, ou
iii) une quantité d'antennes d'émission d'UE est inférieure à une quantité maximale d'antennes d'émission d'UE.

3. Procédé de communication sans fil selon la revendication 1, dans lequel la quantité de rang d'émission d'UE (111, 112, 113) est égale à 2, et la quantité maximale de rang d'émission d'UE est égale à 4.

4. Procédé de communication sans fil selon la revendication 1, dans lequel le ou les paramètres de l'UE (111, 112, 113) comportent en outre une table de schéma de modulation et de codage, MCS, dans une configuration de canal partagé de liaison descendante physique, PDSCH,
dans lequel la table MCS dans la configuration PDSCH n'est pas 'qam64LowSE'.

5. Procédé de communication sans fil selon la revendication 1, dans lequel le ou les paramètres de l'UE (111, 112, 113) comportent en outre un type d'espace de recherche,
dans lequel le type d'espace de recherche est différent d'un espace de recherche spécifique à l'UE (111, 112, 113).

6. Procédé de communication sans fil selon la revendication 1, dans lequel le ou les paramètres de l'UE (111, 112, 113) comportent en outre une table d'indicateur de qualité de canal, CQI, dans une configuration de rapport d'informations d'état de canal, CSI,
dans lequel la table de CQI dans la configuration de rapport CSI est 'table3'.

7. Procédé de communication sans fil selon la revendication 1, dans lequel le ou les paramètres de l'UE (111, 112, 113) comportent en outre un symbole de début et une longueur dans une configuration PUSCH ou une configuration PDSCH,
dans lequel une longueur L de symboles de multiplexage par répartition orthogonale de la fréquence, OFDM, indiquée par le symbole de début et la longueur est inférieure à une première valeur de seuil, et/ou un indice de symboles de début S indiqué par le symbole de début et la longueur est inférieur à une seconde valeur de seuil, et
dans lequel la première valeur de seuil est l'une parmi 3, 4, 5, 6, 7 ou 8, et la seconde valeur de seuil est l'une parmi 1, 2, 3, 4, 5, 6, 7 ou 8.

8. Procédé de communication sans fil selon la revendication 1, dans lequel le ou les paramètres de l'UE (111, 112, 113) comportent en outre au moins l'un parmi i) un niveau d'agrégation qui n'est pas supérieur à une valeur de seuil égale à 2 ou 4, ou ii) une plage de fréquences qui est différente de FR2.

9. Procédé de communication sans fil, comportant :
la réception, par un équipement utilisateur, UE (111, 112, 113), en provenance d'un dispositif de réseau (120), d'informations de configuration qui sont configurées par le dispositif de réseau (120) et comportent un ou plusieurs paramètres de l'UE (111, 112, 113) qui comportent un procédé d'embrouillage configuré pour un canal de commande de liaison descendante physique, PDCCH, dans lequel les informations de configuration sont configurées par le dispositif de réseau sur la base du fait de déterminer que le procédé d'embrouillage configuré pour le PDCCH ne correspond pas à des informations dans un identifiant temporaire de réseau radio cellulaire de schéma de modulation et de codage, MCS-C-RNTI ; et
le fonctionnement, en réponse à la réception des informations de la configuration, dans un mode d'économie d'énergie, dans lequel le fonctionnement dans le mode d'économie d'énergie comporte la réalisation d'un mode de traitement à entrées multiples sorties multiples, MIMO, amélioré en utilisant une quantité de rang d'émission d'UE (111, 112, 113) à une première valeur qui est inférieure à une quantité maximale de rang d'émission d'UE.

10. Procédé de communication sans fil selon la revendication 9, dans lequel le mode de traitement MIMO amélioré satisfait à au moins l'une parmi des conditions suivantes :
i) une quantité de rang de réception d'UE (111, 112, 113) est inférieure à un rang maximal de réception d'UE qui est obtenu sur la base d'un rapport de capacité d'UE,
ii) une quantité de panneaux d'antenne de réception d'UE (111, 112, 113) est inférieure à une quantité maximale de panneaux d'antenne de réception d'UE, ou
iii) une quantité d'antennes d'émission d'UE est inférieure à une quantité maximale d'antennes d'émission d'UE.

11. Procédé de communication sans fil selon la revendication 9, dans lequel la quantité de rang d'émission d'UE (111, 112, 113) est égale à 2, et la quantité maximale de rang d'émission d'UE est égale à 4.

12. Procédé de communication sans fil selon la revendication 9, dans lequel le ou les paramètres de l'UE (111, 112, 113) comportent en outre une table de schéma de modulation et de codage, MCS, dans une configuration de canal partagé de liaison descendante physique, PDSCH,
dans lequel la table MCS dans la configuration PDSCH n'est pas 'qam64LowSE'.

13. Procédé de communication sans fil selon la revendication 9, dans lequel le ou les paramètres de l'UE (111, 112, 113) comportent en outre un type d'espace de recherche,
dans lequel le type d'espace de recherche est différent d'un espace de recherche spécifique à l'UE (111, 112, 113).

14. Procédé de communication sans fil selon la revendication 9, dans lequel le ou les paramètres de l'UE (111, 112, 113) comportent en outre une table d'indicateur de qualité de canal, CQI, dans une configuration de rapport d'informations d'état de canal, CSI,
dans lequel la table de CQI dans la configuration de rapport CSI est 'table3'.

15. Procédé de communication sans fil selon la revendication 9, dans lequel le ou les paramètres de l'UE (111, 112, 113) comportent en outre un symbole de début et une longueur dans une configuration PUSCH ou une configuration PDSCH,
dans lequel une longueur L de symboles de multiplexage par répartition orthogonale de la fréquence, OFDM, indiquée par le symbole de début et la longueur est inférieure à une première valeur de seuil, et/ou un indice de symboles de début S indiqué par le symbole de début et la longueur est inférieur à une seconde valeur de seuil, et
dans lequel la première valeur de seuil est l'une parmi 3, 4, 5, 6, 7 ou 8, et la seconde valeur de seuil est l'une parmi 1, 2, 3, 4, 5, 6, 7 ou 8.

16. Procédé de communication sans fil selon la revendication 9, dans lequel le ou les paramètres de l'UE (111, 112, 113) comportent en outre au moins l'un parmi i) un niveau d'agrégation qui n'est pas supérieur à une valeur de seuil égale à 2 ou 4, ou ii) une plage de fréquences qui est différente de FR2.
